(19) Europäisches Patentamt
European Patent Office
Office européen des brevets

(11) Veröffentlichungsnummer: 0 374 553 A2

(12) # EUROPÄISCHE PATENTANMELDUNG

(21) Anmeldenummer: 89122269.7

(51) Int. Cl.5: **C08F 8/00**

(22) Anmeldetag: 02.12.89

(30) Priorität: 15.12.88 DE 3842217

(43) Veröffentlichungstag der Anmeldung: 27.06.90 Patentblatt 90/26

(84) Benannte Vertragsstaaten: DE FR GB IT NL

(71) Anmelder: BAYER AG
D-5090 Leverkusen 1 Bayerwerk(DE)

(72) Erfinder: Fritsch, Karl-Herbert, Dr.
Hackberg 25
D-5060 Bergisch Gladbach 1(DE)
Erfinder: Leitz, Edgar, Dr.
Goethestrasse 63
D-4047 Dormagen 1(DE)
Erfinder: Wittmann, Dieter, Dr.
Wolfskaul 4
D-5000 Köln 80(DE)

(54) **Verfahren zur Herstellung von Polymeren mit phenolischen Hydroxylendgruppen.**

(57) Verfahren zur Herstellung von Polymeren mit phenolischen Endgruppen durch

1. Herstellung eines Polyanions durch anionische Polymerisation einer oder mehrerer Vinylverbindungen.
2. Umsetzung des Polyanions mit einer Verbindung der Formel (III)

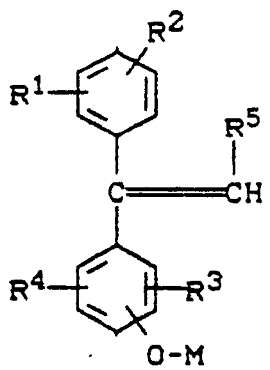

(III)

wobei
M = Alkalimetall und
$R^1$, $R^2$, $R^3$, $R^4$, $R^5$ Kohlenwasserstoffreste sind,

3. Neutralisation der Umsetzungsprodukte und Isolierung des Polymers.

EP 0 374 553 A2

Xerox Copy Centre

## Verfahren zur Herstellung von Polymeren mit phenolischen Hydroxylendgruppen

Die Erfindung betrifft ein Verfahren zur Herstellung von Polymeren der Formeln I und II

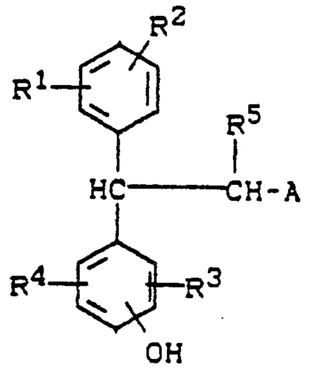

(I)

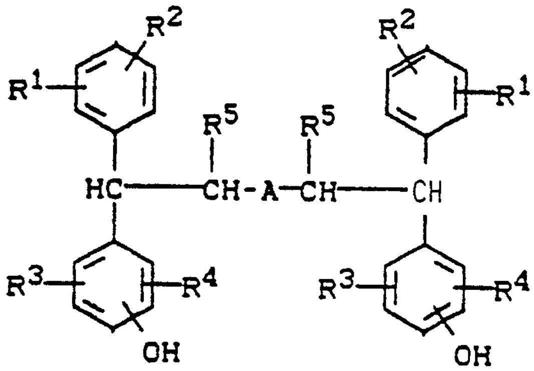

(II)

worin

A = Polymerisat von anionisch polymerisierbaren Vinylverbindungen

$R^1$, $R^2$ = H, $C_1$-$C_4$-Alkyl, $OCH_3$

$R^3$ = H, $C_1$-$C_4$-Alkyl, O-$C_1$-$C_4$-Alkyl

$R^4$ = H, $C_1$-$C_4$-Alkyl,

$R^5$ = H, $C_1$-$C_6$-Alkyl.

Die DE-OS 37 25 848 beschreibt u.a. die Herstellung von Polymeren mit einer Dihydroxyarylendgruppe durch anonische Polymerisation eines geeigneten Vinylmonomeren, gegebenenfalls Verminderung der Reaktivität des primär gebildeten Polyanions durch 1,1-Diphenylethylen, Umsetzung mit 2,5-Dimethoxybenzylbromid und Entfernung der Schutzgruppe durch anschließende Etherspaltung mit Trimethyliodsilan, Trimethylchlorsilan und Natriumiodid oder Säuren.

Die Verbindungen eignen sich als Stabilisatoren für Polymere, insbesondere solchen mit ungesättigten Bindungen in der Polymerkette, gegen thermischen, strahleninduzierten und oxidativen Abbau.

Die Umsetzung von sogenannten "lebenden" Polymeren wie Polystyrollithium) mit weiteren funktionelle Gruppen enthaltenden Halogenverbindungen liefert funktionelle Polymere, ist aber begleitet von Nebenreaktionen (vgl. J. Polym. Sci. A 3, 4131 (1965); Polymer 17, 1020 (1976); J. Polym. Sci. B 14, 471(1976); Adv. Polym. Sci. 56, 72 (1984)].

Die Ausbeute an funktionellem Polymer ist daher oftmals nicht befriedigend. Für technische Zwecke ist diese Reaktion daher nicht geeignet.

Die DE-OS 38 21 745.7 betrifft Trialkylsilyloxy-diphenylethylene und damit hergestellte Polymere. Sie beschreibt auch ein Verfahren zur Herstellung von polymeren Vinylverbindungen mit phenolischen Hydroxylendgruppen durch anionische Polymerisation und zwar durch Umsetzung von "lebenden" Polymeranionen mit Hydroxy-1,1-diphenylethylenen, deren OH-Gruppen maskiert sind, um eine Desaktivierung der Polymeranionen durch Reaktion mit der phenolischen Gruppe des 1,1-Diphenylethylens zu vermeiden. Man überführt die phenolischen Gruppen zur Maskierung zunächst in einen Silylether unter Bildung von Trialkylsilyloxy-1,1-diphenylethylen. Zur Gewinnung der Polymeren mit freien phenolischen Hydroxylendgruppen ist eine Silyletherspaltung notwendig.

Dieser Erfindung liegt die Erkenntnis zugrunde, daß Polymere mit phenolischen Hydroxylendgruppen durch direkte Umsetzung von "lebenden" Polymeranionen mit Alkalimetallphenolaten von Hydroxy-1,1-diphenylethylenen erhalten werden, wenn diese als Lösung in aprotischen polaren Lösungsmitteln oder als Lösung in Mischungen aus aprotischen polaren und aprotischen unpolaren Lösungsmitteln eingesetzt werden.

Das Verfahren zur Herstellung von polymeren Verbindungen mit phenolischen Hydroxylendgruppen der Formeln (I) und (II)

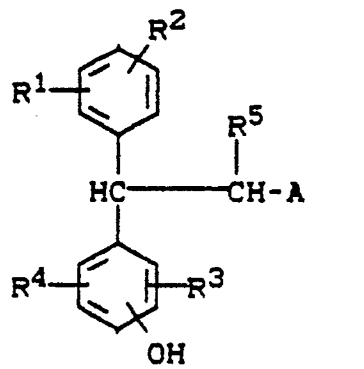

(I)

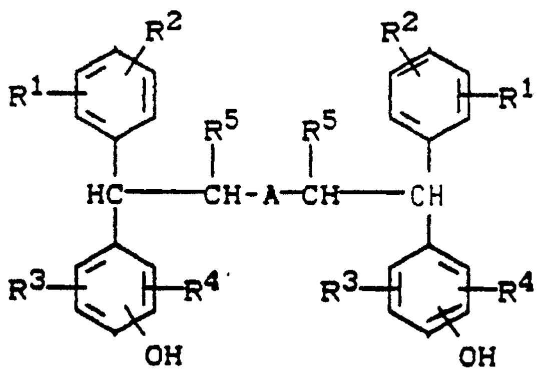

(II)

worin

A = Polymerisat von anionisch polymerisierbaren Vinylverbindungen

$R^1$, $R^2$ = H, $C_1$-$C_4$-Alkyl, $OCH_3$

$R^3$ = H, $C_1$-$C_4$-Alkyl, O-$C_1$-$C_4$-Alkyl

$R^4$ = H, $C_1$-$C_4$-Alkyl,

$R^5$ = H, $C_1$-$C_6$-Alkyl,

ist gekennzeichnet durch:

1. Herstellung eines Polyanions durch anionische Polymerisation einer oder mehrerer geeigneter Vinylverbindungen.

2. Umsetzung des Polyanions mit einer Verbindung der Formel (III)

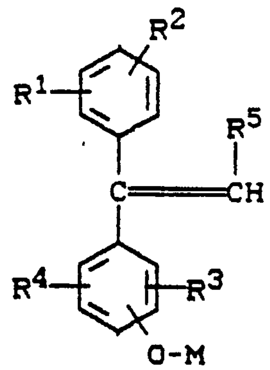

(III)

wobei
M = Alkalimetall und
$R^1$, $R^2$, $R^3$, $R^4$, $R^5$ die obengenannte Bedeutung haben.

3. Neutralisation der Umsetzungsprodukte (die selbst Polyanionen sind) mit protischen Verbindungen und Isolierung der Polymeren der Formel (I).

In Teilschritt 1 polymerisiert man anionisch polymerisierbare Vinylverbindungen in aromatischen oder aliphatischen Kohlenwasserstoffen oder einem Ether als Polymerisationsmedium mit einer Alkylalkalimetall-, Arylalkalimetallverbindung oder einer oligomeren α-Methylstyrol-Alkalimetall-Verbindung unter Ausbildung eines "lebenden" Polyanions oder Polydianions bis zum vollständigen Umsetz des Monomeren.

Geeignete anionisch polymerisierbare Vinylverbindungen sind z.B. Styrol, p-Methylstyrol, Vinylpyridin, Vinylnaphthalin, Isopropenylnaphthalin, 1,3-Butadien, Isopren, Methacrylate, Acrylate oder Mischungen daraus. Bevorzugte anionisch polymerisierbare Vinylverbindungen sind Styrol, 1,3-Butadien, Isopren, Mischungen aus Styrol und 1,3-Butadien, Mischungen aus Styrol und Isopren.

Als Polymerisationsmedium geeignete aromatische und aliphatische Kohlenwasserstoffe sind z.B. Toluol, Benzol, Xylol, Pentan, Hexan, Cyclohexan. Geeignete Ether sind z.B. Tetrahydrofuran und Dioxan. Man kann auch Gemische aus aromatischen oder aliphatischen Kohlenwasserstoffen und Ethern verwenden (und so die Reaktionsgeschwindigkeit beeinflussen, die vom Reaktionsmedium abhängt).

Zur Herstellung der Polymeren der Formel (I) werden Alkylalkalimetallverbindungen, insbesondere n-Butyl- oder sec.-Butyllithium als Initiatoren eingesetzt.

Zur Herstellung des Polymeren der Formel II werden Arylalkalmetallverbindungen, insbesondere Naphthalinnatrium, Naphthalinkalium, oligo-α-Methylstyrolnatrium, oligo-α-Methylstyrylkalium oder 1,3-Phenylen-bis-(3-methyl-1-phenyl-pentyliden)bis(lithium) als Initiatoren verwendet.

Die anionisch polymerisierbaren Verbindungen können bei -100 bis +80 °C, vorzugsweise -80 bis +50 °C polymerisiert werden.

In Teilschritt 2 setzt man das im Teilschritt 1 gebildete "lebende" Polyanion oder Polydianion mit einer Verbindung der Formel III um, wobei sich ein neues Polyanion bzw. -dianion bildet.

Die "lebenden" Polyanionen können mit der Verbindung der Formel (III) bei -80 bis +100 °C, vorzugsweise bei 0 bis +50 °C, umgesetzt werden. Verbindung (III) wird in Lösung und vorzugsweise in Überschuß, bezogen auf Initiator, zugesetzt.

Verbindungen der Formel (III) lassen sich wie folgt herstellen:

Durch alkalikatalysierte thermische Spaltung von 1-Alkyl-1-phenyl-bis(hydroxyphenyl)methan der Formel IV sind Hydroxy-1,1-diphenylethylene der Formel V zugänglich (DE-AS 1 235 894):

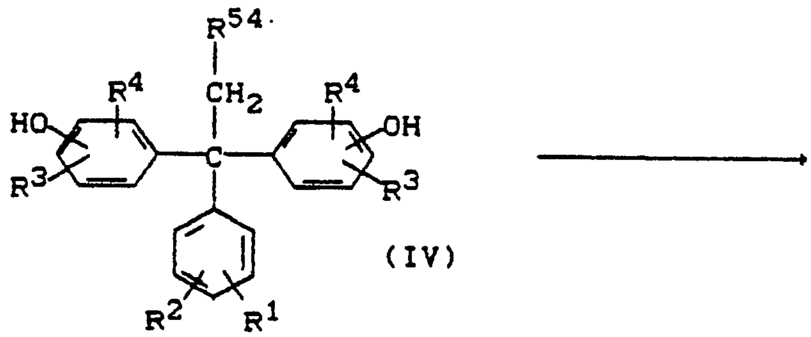

(IV)

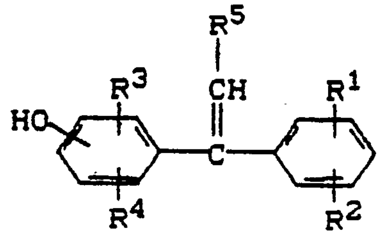

(V)

In Formeln (IV) und (V) haben $R^1$, $R^2$, $R^3$, $R^4$, $R^5$ die oben angegebene Bedeutung.

Beispiele für Verbindungen der Formel IV sind:

1-Methyl-1-phenyl-bis(4-hydroxyphenyl)methan,
1-Ethyl-1-phenyl-bis(4-hydroxyphenyl)methan,
1-Propyl-1-phenyl-bis(4-hydroxyphenyl)methan,
1-Pentyl-1-phenyl-bis(4-hydroxyphenyl)methan,
1-Methyl-1-(4-methylphenyl)-bis(4-hydroxpyhenyl)methan,
1-Methyl-1-(4-methoxyphenyl)-bis(4-hydroxyhenyl)methan,
1-Methyl-1-(4-dimethylphenyl)-bis(4-hydroxyphenyl)methan,
1-Methyl-1-phenyl-bis(2-hydroxyphenyl)methan,
1-Methyl-1-phenyl-bis(3-methyl-4-hydroxyphenyl)methan,
1-Methyl-1-phenyl-bis(3-methoxy-4-hydroxyphenyl)methan,
1-Methyl-1-phenyl-bis(3,5-dimethyl-4-hydroxyphenyl)methan,
1-Methyl-1-phenyl-bis(3,5-dimethyl-2-hydroxyphenyl)methan.

Eine besonders geeignete Verbindung der Formel IV ist:

1-Methyl-1-phenyl-bis(4-hydroxyphenyl)methan.

Daraus erhaltene und für das Verfahren der Erfindung, geeignete Verbindungen der Formel (V) sind beispielhaft:

4-Hydroxy-1,1-diphenylethylen
4-Methyl-4′-hydroxy-1,1-diphenylethylen
4-Ethyl-4′-hydroxy-1,1-diphenylethylen
3-Methoxy-4′-hydroxy-1,1-diphenylethylen
4-Isopropyl-4′hydroxy-1,1-diphenylethylen
4-Methyl-2′-hydroxy-5′-methyl-1,1-diphenylethylen
3-Methyl-4-hydroxy-1,1-diphenylethylen
4-Methoxy-2′-hydroxy-3′,5′-dimethyl-1,1-diphenylethylen
3-Methoxy-4-hydroxy-1,1-diphenylethylen
4-Hydroxy-ß-methyl-1,1-diphenylethylen
4-Hydroxy-ß-propyl-1,1-diphenylethylen.

Besonders geeignete Verbindungen der Formel V sind:

4-Hydroxy-1,1-diphenylethylen.

Zur Herstellung der Verbindungen der Formel (III) muß nur die Verbindung (V) in ihr lösliches Alkalimetallphenolat durch Reaktion mit Alkalimetallen, Hydriden der Alkalimetalle oder alkalimetallorganische Verbindungen, wie Butyllithium, Methyllithium, Phenyllithium, Cumylkalium, übergeführt werden. Dafür besonders geeignet sind Lithium, Natrium, Kalium, Lithiumhydrid, Natriumhydrid, s-Butyllithium oder n-Butyllithium. Die Alkalimetalle bzw. Alkalimetallverbindungen werden vorzugsweise in geringem molaren Überschuß, bezogen auf Verbindung (V) zugesetzt.

Geeignete Lösungsmittel für Verbindungen der Formel (III) sind polare aprotische Lösungsmittel und

Mischungen aus polaren aprotischen Lösungsmitteln und unpolaren aprotischen Lösungsmitteln.

Geeignete polare aprotische Lösungsmittel sind einfache Ether, wie Dibutylether, gemischt aliphatisch-aliphatische Ether, wie Butyl-Methylether, gemischt aromatisch-aliphatische Ether, wie Methoxyphenol, oder cyclische Ether, wie Tetrahydrofuran, Dioxan.

Besonders geeignete polare aprotische Lösungsmittel sind Tetrahydrofuran und Methoxyphenol.

Geeignete Mischungen aus polaren aprotischen Lösungsmitteln und unpolaren aprotischen Lösungsmittels sind Mischungen aus den genannten polaren aprotischen Lösungsmitteln und aliphatischen Kohlenwasserstoffen, wie Hexan, Cyclohexan, oder aromatischen Kohlenwasserstoffen, wie Toluol, Benzol.

Besonders geeignet sind Mischungen aus Tetrahydrofuran und Hexan, Cyclohexan oder Toluol, im Gewichtsverhältnis ≧ 1:1.

Die Lösungen von Verbindungen der Formel (III) enthalten bevorzugt 0,01 bis 2,0 mol/l Lösungsmittel, vorzugsweise 0,01 bis 1,5 mol/l Lösungsmittel.

Im Teilschritt 3 neutralisiert man das Polyanion mit protischen Verbindungen und isoliert das Polymere.

Geeignete Neutralisationsmittel für die "lebenden" Polymeranionen sind z.B. schwache anorganische oder organische Säuren, insbesondere Methanol oder Essigsäure.

Da das erfindungsgemäße Verfahren mit "lebenden" Carbonionen arbeitet, sind natürlich Bedingungen einzuhalten, unter denen "lebende" Carbonionen beständig sind, z.B inerte Atmosphäre, Ausschluß von Luftsauerstoff und -feuchtigkeit.

Die Polymeren der Formel (I) können durch Ausfällen aus der Lösung, vorzugsweise unter Verwendung von Methanol oder durch Ausdampfen der Polymerlösung in bekannten Ausdampfaggregaten isoliert werden.

Die Polymeren der Formel (I) besitzen (über das Verhältins Monomerkonzentration zu Initiatorkonzentration steuerbare) Molekulargewichte von 500 bis 500 000 g/mol, vorzugsweise 1000 bis 250 000 g/mol, besonders bevorzugt 1000 bis 100 000 g/mol.

Die Polymeren der Formel (I) eignen sich z.B. als Gleitmittel bei der Herstellung von Formteilen aus Thermoplasten.

## Beispiele

### Herstellung von 1-Methyl-1-phenyl-bis(4-hydroxyphenyl)methan

In ein Gemisch von 240 g (2 Mol) Acetophenon, 940 g (10 Mol) Phenol und 30 g Mercaptopropionsäure leitet man bis zur Sättigung HCl-Gas ein, wobei langsam auf 50 °C erwärmt wird. Man hält 5 h bei diesen Bedingungen, läßt über Nacht stehen und destilliert zunächst im Wasserstrahlvakuum HCl und Wasser und dann das überschüssige Phenol bis zu einer Sumpftemperatur von 120 °C ab. Der verbleibende Rückstand von 510 g aus 1250 ml Toluol unter Rückfluß umgelöst, nach Abkühlen abgesaugt und getrocknet: 412 g Fp. 185-7 °C; 72 % der Theorie (MG 580 g mol).

### Herstellung von 4-Hydroxy-1,1-diphenylethylen

400 g des nach obigen Verfahren erhaltenen Triphenylmethanderivates werden mit 4 g NaOH auf 180-220 °C gebracht. Bei 130-160 °C und etwa 15 mbar gehen die Spaltprodukte über. Man erhält insgesamt 340 g Destillat und ca. 56 g braunen harzigen Rückstand.

Durch Restdestillation wird aus diesem Destillat eine Fraktion von 120 g isoliert, die der Verbindung 4-Hydroxy-1,1-diphenylethylen entspricht (45 % der Theorie.; MG 196 g mol).

### Herstellung der Lithiumphenolat-Lösung von 4-Hydroxy-1,1-diphenylethylen

Zu 4-Hydroxy-1,1-diphenylethylen wurde das Lösungsmittel destilliert. Der Lösung wurde langsam unter Rühren Butyllithium-Lösung mittels einer Spritze zugesetzt (Butan-Entwicklung). Gegen Ende der Zugabe trat Rotfärbung der Reaktionslösung auf. Die Arbeiten wurden unter $N_2$-Atmosphäre durchgeführt.

Die Versuchsdaten sind in Tabelle 1 zusammengestellt.

Tabelle 1

| Beispiel | Lösungsmittel | 4-Hydroxy-1,1-diphenylethylen | s-Butyllithium[1)] | n-Butyllithium[2)] | Löslichkeit des Phenolats |
|---|---|---|---|---|---|
| 1 | THF/57 ml | 0,5 g/2,55 x $10^{-3}$ mol | 2 ml/2,6 x $10^{-3}$ mol | - | löslich |
| 2 | THF/45 ml | 2 g/1,02 x $10^{-2}$ mol | 8 ml/1,04 x $10^{-2}$ mol | - | löslich |
| 3 | THF/45 ml | 4 g/2,04 x $10^{-2}$ mol | 20 ml/2,6 x $10^{-2}$ mol | - | löslich |
| 4 | THF/22,5 ml | 8 g/4,08 x $10^{-2}$ mol | - | 16,5 ml/4,14 x $10^{-2}$ mol | löslich |
| 5 | Anisol/45 ml | 4 g/2,04 x $10^{-2}$ mol | 20 ml/2,6 x $10^{-2}$ mol | | löslich |
| 6 | Toluol/45 ml | 2 g/1,02 x $10^{-2}$ mol | 8 ml/1,04 x $10^{-2}$ mol | | unlöslich |

1) 1,3 molare Lösung in Cyclohexan/Isopentan (92:8 Vol %)

2) 2,5 molare Lösung in -Hexan

Umsetzung eines "lebenden" Polystyrolanions mit einer Lithiumphenolat-Lösung von 4-Hydroxy-1,1-diphenylethylen

Zu einem Gemisch aus 100 g Styrol in 500 ml Toluol wurden unter $N_2$-Atmosphäre 15 ml s-Butyllithium (1,3 molare Lösung in Cyclohexan/Isopentan 92:8 Vol-%) mittels einer Spritze unter schnellem Rühren bei Raumtemperatur gegeben. Die Lösung färbte sich dabei orangerot. Nach einer Reaktionszeit von 2 h wurden die Lithiumphenolat-Lösungen der Beispiele 2 und 3 (Tab. 1) zugegeben. Die Farbe der Lösung veränderte sich langsam nach dunkelrot.

Nach weiteren 2 h wurden ca. 5 ml Methanol ($N_2$-gesättigt) zugegeben, wobei sich die Lösung weitgehend entfärbte. Das Polymere wurde anschließend durch Fällung in Methanol isoliert.

Ausbeute: 103 g

GPC: $M_n$ = 4700 g/mol, $M_w$ 5100 g/mol (Polystyrol-Eichung)

Herstellung der Natrium(Kalium)phenolat-Lösung von 4-Hydroxy-1,1-diphenylethylen

Zu 4-Hydroxy-1,1-Diphenylethylen wurde Tetrahydrofuran als Lösungsmittel destilliert. Die Lösung wurde mit blanken Natrium(Kalium)metall versetzt ($H_2$-Entwicklung !). Gegen Ende der Reaktion färbte sich die Lösung dunkelgrün.

Alle Arbeiten wurden unter $N_2$-Atmosphäre durchgeführt. Die Versuchsdaten sind in Tabelle 2 zusammengefaßt.

Umsetzung eines "lebenden" Polystyrolanions mit einer Natriumphenolat-Lösung von 4-Hydroxy-1,1-diphenylethylen

Zu einem Gemisch aus 100 g Styrol in 500 ml Toluol wurden unter $N_2$-Atmosphäre 15 ml s-Butyllithium (1,3 molare Lösung in Cyclohexan/Isopentan 92:8 Vol-%) mittels einer Spritze unter schnellem Rühren bei Raumtemperatur gegeben. Die Lösung färbte sich dabei orangerot. Nach einer Reaktionszeit von 2 h wurden die Natriumphenolat-Lösungen der Beispiele 7 und 8 (Tab. 2) zugegeben. Die Farbe der Lösung veränderte sich langsam nach dunkelrot. Nach weiteren 2 h wurden ca. 5 ml Methanol ($N_2$-gesättigt) zugegeben. Die Lösung hellte sich auf, jedoch zeigte die Lösung weiterhin Rotfärbung. Das Polymere wurde anschließend durch Fällung in Methanol isoliert.

Ausbeute: 102 g

GPC: $M_n$ = 4800 g mol, $M_w$ = 5000 g mol (Polystyrol-Eichung)

Umsetzung eines "lebenden" Polystyrolanions mit einer Kaliumphenolat-Lösung von 4-Hydroxy-1,1-diphenylethylen

Zu einem Gemisch aus 100 g Styrol in 500 ml Toluol wurden unter $N_2$-Atmosphäre 15 ml s-Butyllithium (1,3 molare Lösung in Cyclohexan/Isopentan 92:8 Vol-%) mittels einer Spritze unter schnellem Rühren bei Raumtemperatur gegeben.

Die Lösung färbte sich dabei orangerot. Nach einer Reaktionszeit von 2 h wurden die Kaliumphenolat-Lösungen der Beispiele 9 und 10 (Tab. 2) zugegeben. Die Farbe der Lösung veränderte sich langsam nach dunkelrot. Nach weiteren 2 h wurden ca. 5 ml Methanol ($N_2$-gesättigt) zugegeben. Die Lösung zeigte anschließend Gelbfärbung. Das Polymere wurde durch Fällung in Methanol isoliert.

Ausbeute: 103 g

GPC: $M_n$ = 4200 g mol, $M_w$ = 4500 g mol) (Polystyrol-Eichung)

Tabelle 2

| Beispiel | Tetrahydrofuran | 4-Hydroxy-1,1-diphenylethylen | Natrium | Kalium | Löslichkeit des Phenolats |
|---|---|---|---|---|---|
| 7 | 45 ml | 2 g/1,02 x $10^{-2}$ mol | 0,3 g/1,3 x $10^{-2}$ mol | - | löslich |
| 8 | 45 ml | 4 g/2,04 x $10^{-2}$ mol | 0,5 g/2,17 x $10^{-2}$ mol | - | löslich |
| 9 | 45 ml | 2 g/1,02 x $10^{-2}$ mol | - | 0,45 g/1,5 x $10^{-2}$ mol | löslich |
| 10 | 45 ml | 2 g/2,04 x $10^{-2}$ mol | - | 0,85 g/2,18 x $10^{-2}$ mol | löslich |

## Ansprüche

1. Verfahren zur Herstellung von Polymeren der Formeln (I) und (II)

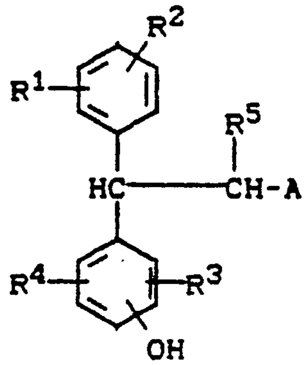

(I)

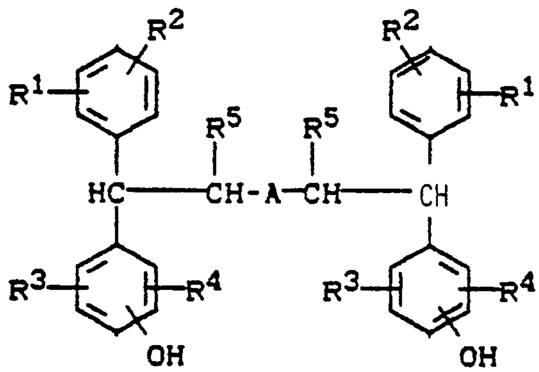

(II)

worin
A = Polymerisat von anionisch polymerisierbaren Vinylverbindungen
$R^1$, $R^2$ = H, $C_1$-$C_4$-Alkyl, $OCH_3$
$R^3$ = H, $C_1$-$C_4$-Alkyl, O-$C_1$-$C_4$-Alkyl
$R^4$ = H, $C_1$-$C_4$-Alkyl,
$R^5$ = H, $C_1$-$C_6$-Alkyl,
gekennzeichnet durch

1. Herstellung eines Polyanions durch anionische Polymerisation einer oder mehrerer Vinylverbindungen,
2. Umsetzung des Polyanions mit einer Verbindung der Formel (III)

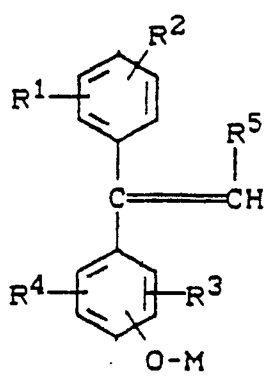

(III)

wobei
M = Alkalimetall und
$R^1$, $R^2$, $R^3$, $R^4$, $R^5$ die obengenannte Bedeutung haben,

3. Neutralisation der Umsetzungsprodukte und Isolierung des Polymers.

2. Verfahren nach Anspruch 1, worin man die Verbindungen der Formel (III) als Lösung in polaren aprotischen Lösungsmitteln oder Mischungen aus polaren aprotischen Lösungsmitteln und unpolaren aprotischen Lösungsmitteln einsetzt.

3. Verfahren nach Anspruch 2, worin die Verbindungen der Formel (III) in einer Konzentration von 0,01 bis 2,0 mol/l Lösungsmittel oder Lösungsmittelgemisch eingesetzt werden.